# FASCICULE DE BREVET EUROPEEN

(11) **EP 2 395 297 B1**
(45) Date de publication et mention de la délivrance du brevet: **22.04.2015**
(21) Numéro de dépôt: 11169069.9
(22) Date de dépôt: 08.06.2011
(51) Int. Cl.: F24H 9/20, G01F 23/24

(54) **Procédé et dispositif de détermination d'une capacité d'eau mitigée**
Verfahren und Vorrichtung zur Bestimmung einer Mischwasserkapazität
Method and device for determining a mitigated water capacity

(30) Priorité: 10.06.2010 FR 1054589
(43) Date de publication de la demande: 14.12.2011
(73) Titulaire: Atlantic Industrie, 85000 La Roche sur Yon (FR)
(72) Inventeur: Penisson, Pierre, 85430 Nieul Le Dolent (FR); Merlet, Christian, 85140 Les Essarts (FR)
(74) Mandataire: Kaspar, Jean-Georges

(56) Documents cités:
- EP-A2- 1 172 616
- EP-A2- 2 009 360
- WO-A1-00/58668
- DE-A1-102005 003 455
- JP-A- 2002 048 397
- US-A1- 2002 125 242
- US-A1- 2003 178 498
- US-A1- 2005 022 542

## Description

L'invention est relative à un procédé de détermination d'une capacité d'eau mitigée à une température d'utilisation prédéterminée.

L'invention est également relative à un dispositif de détermination d'une capacité d'eau mitigée à une température d'utilisation prédéterminée.

L'invention est particulièrement utile pour les utilisateurs des accumulateurs d'eau chaude, notamment des utilisateurs de chauffe-eau électrique, thermique, thermodynamique ou de chauffe-eau solaire à accumulation.

L'estimation précise du volume d'eau chaude contenue dans un chauffe-eau est obtenue de manière connue par un capteur longitudinal unique de température fixé sur toute la hauteur de la cuve. Ce capteur longitudinal unique donne la température moyenne de l'ensemble de la cuve et fournit des données à un programme d'estimation d'un volume d'eau mitigée disponible.

Les documents WO 00/58668 A1, US 2005/022542 A1, DE 4401539, JP 8178424, FR 2.919.048, GB 588729 et JP 60223959 décrivent des dispositifs permettant d'estimer l'eau chaude contenue dans une cuve d'accumulateur d'eau chaude, notamment dans une cuve de chauffe-eau.

Un premier but de l'invention est de fournir à un utilisateur une estimation d'une capacité d'eau mitigée à une température d'utilisation prédéterminée, généralement à une température de 40°C.

Un deuxième but de l'invention est de fournir à l'utilisateur un procédé de détermination d'une capacité d'eau mitigée à une température d'utilisation prédéterminée, en améliorant la précision de l'estimation par rapport à l'art antérieur.

L'invention a pour objet un procédé de détermination d'une capacité d'eau mitigée à une température d'utilisation prédéterminée, dans lequel l'eau contenue dans un chauffe-eau est chauffée à une température de consigne choisie, comportant les étapes suivantes :
a) mesurer au moins une température d'eau réchauffée à l'aide d'au moins un moyen de mesure correspondant ;
b) estimer la capacité d'eau mitigée en fonction d'une dite température mesurée à l'étape a),
c) utiliser une température d'eau froide entrant dans le chauffe-eau, pour paramétrer une fonction de calcul de ladite capacité d'eau mitigée en fonction d'une température d'eau réchauffée, et en prévoyant l'utilisation de la température de consigne choisie, pour paramétrer une fonction de calcul de ladite capacité d'eau mitigée en fonction d'une température d'eau réchauffée, caractérisé par le fait que la température d'eau froide entrant dans le chauffe-eau est une température mémorisée dans un moyen de mémorisation et remplacée par une température mesurée d'eau froide lorsque la température d'eau mesurée par un dit moyen de mesure d'eau réchauffée le plus proche est voisine d'une température d'eau froide ;

Selon d'autres caractéristiques alternatives de l'invention :
- la température d'eau réchauffée de l'étape c) est une moyenne de plusieurs températures d'eau réchauffée mesurées par des moyens de mesure correspondants ;
- les fonctions de calcul de capacité d'eau mitigée sont des fonctions correspondant à des segments de faisceaux de droites, dont les équations sont définies par des températures d'eau froide ;
- les fonctions de calcul de capacité d'eau mitigée sont des fonctions correspondant à des segments de faisceaux de droites, dont les équations sont définies par les différences de température entre température de consigne et température d'eau froide.

L'invention a également pour objet un dispositif de détermination d'une capacité d'eau mitigée à une température d'utilisation prédéterminée selon la présente revendication 5.

Selon d'autres caractéristiques alternatives de l'invention :
- les fonctions de calcul de capacité d'eau mitigée sont des fonctions correspondant à des segments de faisceaux de droites, dont les équations sont définies par des températures d'eau froide ;
- les fonctions de calcul de capacité d'eau mitigée sont des fonctions correspondant à des segments de faisceaux de droites, dont les équations sont définies par les différences de température entre température de consigne et température d'eau froide ;
- le dispositif comporte un microcontrôleur relié à des moyens de mesure de température d'eau froide, de mesure de température d'eau chaude et de régulation de température d'eau réchauffée, agissant sur des moyens de chauffage d'eau.

L'invention sera mieux comprise grâce à la description qui va suivre donnée à titre d'exemples non limitatifs en référence aux dessins annexés dans lesquels :
La figure 1 représente schématiquement un chauffe-eau à accumulation équipé d'un dispositif selon l'invention ;
La figure 2 représente schématiquement un organigramme d'un procédé de détermination selon l'invention ;
La figure 3 représente schématiquement un graphique illustrant le paramétrage des fonctions de calcul d'un procédé de détermination selon l'invention par suivi de position du miroir avec les sondes d'eau chaude ;

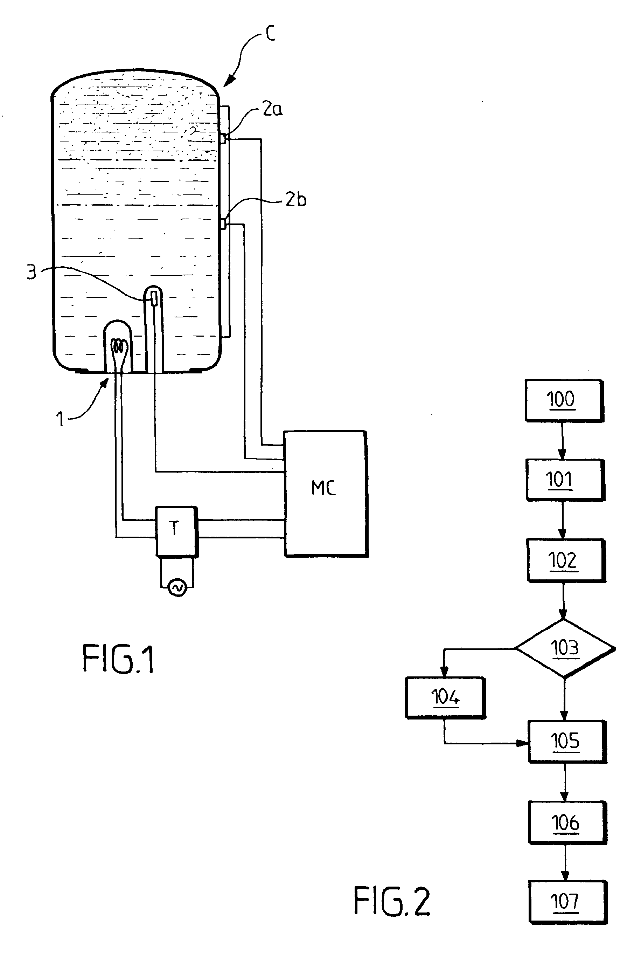

Sur la figure 1, un dispositif de détermination d'une capacité d'eau mitigée est associé à un chauffe-eau comportant une cuve C et des moyens de chauffage 1.

Le dispositif comporte un thermostat T permettant de fixer une consigne de température au moyen d'une molette ou d'un autre bouton non représenté et coopérant avec un moyen de puissance électrique pour commander le moyen de chauffage 1.

Le dispositif comporte également au moins une sonde 2 de température d'eau réchauffée, par exemple deux sondes 2a, 2b, ainsi qu'une zone 3 de mesure de température d'eau froide arrivant dans la cuve C du chauffe-eau.

Le dispositif comporte également un moyen de calcul et de mémorisation de données pour l'estimation d'une capacité d'eau mitigée. Ce moyen de mémorisation de données et de calcul est de préférence constitué par un microcontrôleur MC relié aux sondes de température 2a, 2b et 3 et relié au thermostat T pour tenir compte des températures d'eau froide entrant dans le chauffe-eau, des températures d'eau réchauffée mesurées et de la consigne de température affichée par le thermostat T.

Les sondes 2a, 2b et 3 sont de préférence des éléments sensibles connectables à un circuit électrique ou électronique, par exemple des résistances CTN à coefficient de température négatif.

Le nombre de sondes de température 2a, 2b est défini en fonction de la hauteur de la cuve C et de la plage d'estimation souhaitée.

A titre d'exemple, deux sondes 2a, 2b permettent d'obtenir une plage de mesure de 160 litres pour un chauffe-eau possédant une cuve de 200 litres, à une température d'eau mitigée prédéterminée de 40°C.

La sonde de température 3 permet essentiellement de mesurer la température d'eau froide entrant dans la cuve du chauffe-eau, à condition que l'eau contenue dans la cuve du chauffe-eau soit à une température voisine de la température d'eau froide.

Le microcontrôleur MC comporte un moyen de mémorisation permettant de mémoriser une température d'eau froide par défaut à partir de la première mesure de température d'eau froide au démarrage de la chauffe, puis de corriger la valeur de température d'eau froide dans le cas où l'eau contenue dans le bas du chauffe-eau est suffisamment voisine de cette température d'eau froide.

A titre d'exemple, lorsque la sonde 2b détecte une température d'eau inférieure à 30°C et lorsque l'écart entre la valeur mesurée par la sonde 2b et la valeur mesurée par la sonde 3 est inférieur à 5°C, on affecte à la variable « température d'eau froide » la valeur mesurée par la sonde 3.

Le microcontrôleur MC mémorise une équation permettant de calculer le volume d'eau disponible à partir de la température d'eau froide mémorisée, des températures d'eau réchauffée.

Les sondes 2a, 2b peuvent être montées dans un fourreau métallique, par exemple un tube de section carrée fixé le long de la cuve par un moyen mécanique, par exemple par cerclage, par collage ou par brasage.

De préférence, les sondes 2a, 2b sont montées sur un faisceau souple inséré dans le fourreau constitué par ledit tube de section carrée.

Pour tenir compte des pertes de transmission à travers la paroi de la cuve du chauffe-eau, on peut corriger les valeurs données par les sondes de température 2a, 2b et 3 en fonction d'un étalonnage réalisé au préalable en usine.

A titre d'exemple, les écarts de température entre les valeurs « réelles » des températures d'eau contenue dans la cuve et les valeurs indiquées par les sondes 2a, 2b et 3 ne dépassent pas 3°C.

On distingue trois zones dans la cuve du chauffe-eau : une zone supérieure, une zone intermédiaire et une zone inférieure.

La zone supérieure est remplie d'eau chaude dont la température est généralement proche de la valeur de consigne choisie sur le thermostat T.

Les mélanges et les déperditions thermiques de la cuve expliquent que la température réelle de l'eau chaude dans la partie supérieure est généralement inférieure de quelques degrés à la consigne de température choisie sur le thermostat.

A titre d'exemple, pour une température de thermostat de 53°C, on constate que la valeur réelle de l'eau chaude en partie supérieure est voisine de 53°C.

Dans la zone inférieure, la valeur de la température d'eau froide indiquée par la sonde 3 est généralement supérieure à la température réelle de l'eau froide arrivant dans les canalisations, ceci étant dû à des effets de mélange à l'entrée de la cuve du chauffe-eau.

La zone intermédiaire entre la partie inférieure contenant l'eau froide à réchauffer et la partie supérieure contenant l'eau chaude, est appelée par les hommes du métier "miroir".

Le miroir est un volume d'eau situé entre l'eau froide en partie inférieure et l'eau chaude en partie supérieure. Ce volume intermédiaire présente généralement un gradient thermique qui est considéré comme un gradient thermique linéaire pour la suite de la description.

La position du miroir peut être détectée, dans le cas de plusieurs sondes de température d'eau chaude 2a, 2b par les indications de température données par les sondes 2a, 2b. Le miroir se déplace en montant vers le haut lors de soutirages répétés d'eau chaude. Le déplacement du miroir vers le haut est repéré par les variations de température détectées par les sondes 2a, 2b.

Les indications fournies par les sondes de température 2a, 2b permettent ainsi, dans l'art antérieur, de fournir une estimation grossière d'une disponibilité d'eau chaude à l'utilisateur.

L'invention repose sur l'utilisation d'une température de l'eau froide entrant dans le chauffe-eau et éventuellement de la température de consigne choisie grâce au thermostat, pour définir une stratégie de calcul d'une capacité d'eau chaude mitigée à une température d'utilisation prédéterminée, généralement à une température de 40°C.

Lorsque la cuve du chauffe-eau est équipée de plusieurs sondes 2a, 2b d'eau réchauffée, on convient que la température d'eau réchauffée à prendre en compte est une moyenne ou une fonction des différentes mesures de température d'eau réchauffée fournies par la pluralité de sondes 2a, 2b, etc...

Des effets d'extrémité dans les parties bombées de la cuve du chauffe-eau expliquent que le gradient thermique du miroir n'est pas entièrement constant lors du déplacement du miroir à l'une des extrémités de la cuve du chauffe-eau.

Egalement, le temps de réponse des sondes de mesure et l'absence de stratification thermique dans l'air extérieur à la cuve du chauffe-eau explique que la répartition des températures externes à la cuve du chauffe-eau ne sont pas entièrement identiques à la répartition des températures de l'eau de la cuve.

L'invention repose sur les hypothèses d'une stratification thermique parfaite, d'un miroir ayant un gradient thermique linéaire constant, et d'un temps de réponse instantané des sondes de mesure.

Sur la figure 2, un procédé de détermination d'une capacité d'eau mitigée à une température d'utilisation prédéterminée, notamment à une température de 40°C, débute par une étape 100 de fixation d'une température de consigne grâce au thermostat T de la figure 1.

A l'étape 101, les valeurs de température d'eau réchauffée fournies par au moins un moyen de mesure de température d'eau chaude sont entrées dans un moyen de mémorisation et de calcul tel que le microcontrôleur MC de la figure 1.

A l'étape 102, dans le cas d'une pluralité de sondes de mesure d'eau réchauffée, on définit comme température d'eau réchauffée une moyenne ou une fonction des différentes mesures de température d'eau réchauffée mesurées par des moyens de mesure correspondants.

A l'étape 103, on effectue un test de comparaison entre la température d'eau de la sonde plus basse et une température d'eau froide mesurée par un moyen correspondant tel que la sonde 3 de la figure 1.

Si la température d'eau de la sonde plus basse est inférieure à 30°C et si l'écart entre la température d'eau froide mesurée et la température moyenne d'eau réchauffée ne dépasse pas 5°C, on passe à l'étape 104.

Dans un cas contraire, on passe à l'étape 105.

A l'étape 104, comme la température d'eau de la sonde la plus basse et la température d'eau froide sont voisines, on remplace dans la mémoire du moyen de calcul MC la valeur mémorisée de température d'eau froide par la mesure de température d'eau froide effectuée par la sonde 3 correspondante.

A l'étape 105, on utilise la température d'eau froide définie précédemment et éventuellement la température de consigne choisie sur le thermostat T pour paramétrer une fonction de calcul de capacité d'eau mitigée en fonction de la température d'eau réchauffée mesurée par le moyen de mesure correspondant 2a ou 2b, ou par un seul moyen de mesure 2 dans le cas d'un seul moyen de mesure.

A l'étape 106, on choisit une fonction de calcul paramétrée correspondant à la température d'eau froide définie, et éventuellement à la température de consigne choisie, et à la température d'eau réchauffée définie pour calculer la capacité d'eau mitigée à la température d'utilisation prédéterminée souhaitée par l'utilisateur.

A l'étape 107, on indique sur un moyen d'affichage approprié la capacité d'eau mitigée à la température d'utilisation prédéterminée pour informer l'utilisateur de la capacité restante de la cuve du chauffe-eau.

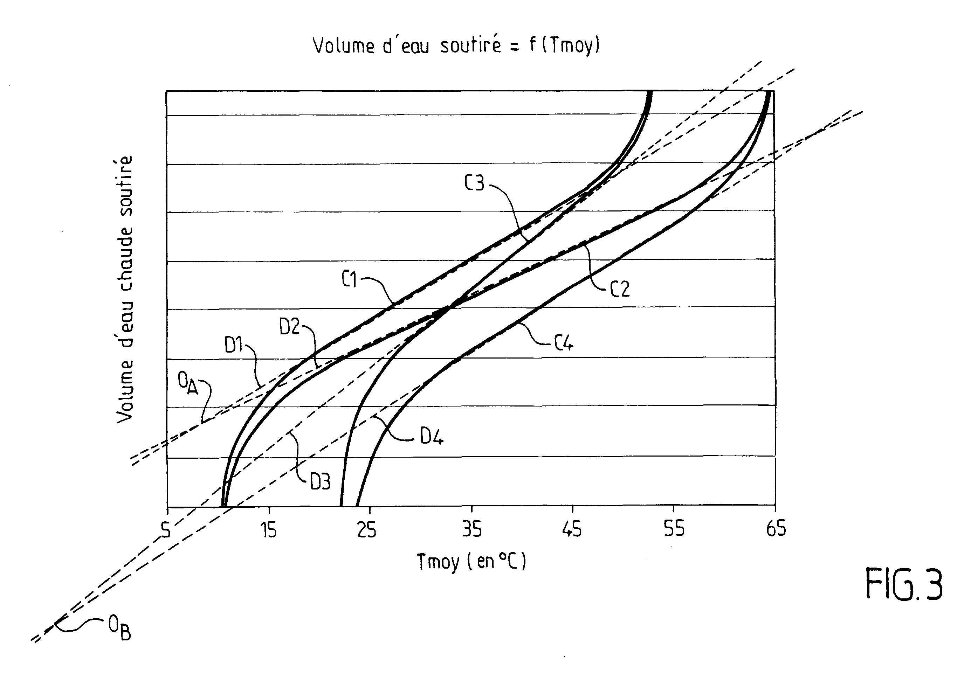

Sur la figure 3, on a représenté en traits continus des courbes réelles de capacité d'eau mitigée en fonction de la température d'eau froide admise dans le chauffe-eau et en fonction de la température de consigne affichée sur un thermostat T.

Les courbes de capacité d'eau mitigée sont obtenues en vidant un chauffe-eau dans les conditions précitées et sont repérées en traits continus.

La courbe C1 correspond à une température d'eau froide de 5°C et à une température de consigne de 53°C

La courbe C2 correspond à une température d'eau froide de 5°C et à une température de consigne de 65°C.

La courbe C3 correspond à une température d'eau froide de 20°C et à une température de consigne de 53°C.

La courbe C4 correspond à une température d'eau froide de 20°C et à une température de consigne de 65°C.

Par effet de mélange, on constate que la capacité restante de la cuve du chauffe-eau à une température mitigée prédéterminée est nulle, alors qu'il reste encore dans le chauffe-eau une quantité d'eau inférieure à la température mitigée prédéterminée, par exemple de 40°C.

Les courbes C1, C2, C3 et C4 présentent dans leurs parties médianes des portions sensiblement linéaires.

Les portions sensiblement linéaires dans les parties médianes des courbes C1, C2, C3 et C4 sont assimilées par une variante préférée d'un procédé selon l'invention à des segments de droites, respectivement D1, D2, D3 et D4.

Les droites D1 et D2 relatives à une même température d'eau froide de 5°C se coupent en un point O_{A} correspondant à une température d'eau froide de 5°C, et définissent avec le point O_{A} un faisceau de droites d'ouverture correspondant à l'angle A, lorsque la température de consigne varie de 53°C à 65°C.

Les droites D3 et D4 se coupent en un point O_{B} correspondant à une température d'eau froide de 20°C.

Le faisceau de droites utilisable pour des températures de consigne compris entre 53°C et 65°C est défini par le point d'intersection O_{B} et par une droite située à l'intérieur de l'angle B.

Ainsi, la pente des droites du faisceau défini par le point d'intersection O_{A} et à une température d'eau froide de 5°C varie en parcourant l'angle A, lorsqu'on modifie la température de consigne en passant de 53°C à 65°C.

De manière analogue, la pente des droites du faisceau défini par le point d'intersection O_{B} varie à l'intérieur de l'angle B, lorsque l'on modifie la température de consigne de 53°C à 65°C.

L'invention permet ainsi de modéliser de manière simple et fiable une capacité d'eau mitigée à une température d'utilisation prédéterminée, de 40°C notamment, au moyen de calculs simples et économes en place mémoire.

L'invention permet ainsi d'effectuer des calculs de capacité d'eau mitigée à une température d'utilisation prédéterminée en utilisant un microcontrôleur de type connu, avec des programmes de calcul simplifiés, moyennant éventuellement quelques corrections dues à l'effet de mélange et de réchauffage de l'eau froide entrant dans la cuve du chauffe-eau et/ou à l'effet de transmission à travers la cuve du chauffe-eau et de compensation des pertes thermiques correspondantes.

L'invention permet ainsi d'afficher sur un écran la capacité d'eau mitigée à une température d'utilisation prédéterminée, de manière à avertir l'utilisateur et à permettre un réenclenchement automatique du chauffage en cas de nécessité.

L'invention permet aussi, selon une variante perfectionnée, de connaître la consommation en eau chaude de l'utilisateur pour optimiser les périodes de chauffe et adapter la température de consigne

L'invention décrit en référence à un mode de réalisation particulier ne lui est nullement limitée, mais couvre au contraire toutes modifications de forme et toutes variantes de réalisation dans le cadre et l'esprit de l'invention.

Ainsi, les faisceaux de droites peuvent être également définis à partir des températures de consigne choisies sur le thermostat T, la pente étant alors définie inversement, à partir de l'intersection des faisceaux correspondants aux températures de consigne, comme représenté sur la figure 3.

Cependant, quel que soit le mode de définition des points d'intersection : un point d'intersection défini à partir de la température de consigne au lieu d'un point d'intersection défini par la température d'eau froide et/ou une pente définie par les températures d'eau froide au lieu de pentes définies par les températures de consigne, il est toujours nécessaire à l'invention de disposer d'une donnée représentative de la température d'eau froide entrant dans le chauffe-eau, moyennant une éventuelle correction due aux effets de mélange et de réchauffage de l'eau entrant dans la cuve du chauffe-eau.

## Revendications

1. Procédé de détermination d'une capacité d'eau mitigée à une température d'utilisation prédéterminée, dans lequel l'eau contenue dans un chauffe-eau est chauffée à une température de consigne choisie, comportant les étapes suivantes :
a) mesurer (101) au moins une température d'eau réchauffée à l'aide d'au moins un moyen de mesure correspondant ;
b) estimer (106) la capacité d'eau mitigée en fonction d'une dite température mesurée à l'étape a) ;
c) utiliser une température (103, 104) d'eau froide entrant dans le chauffe-eau, pour paramétrer (105) une fonction de calcul de ladite capacité d'eau mitigée en fonction d'une température d'eau réchauffée, et en prévoyant l'utilisation de la température de consigne (100) choisie, pour paramétrer (105) une fonction de calcul de ladite capacité d'eau mitigée en fonction d'une température d'eau réchauffée ;
**caractérisé par le fait que** la température d'eau froide entrant dans le chauffe-eau utilisée dans l'estimation de la capaicité d'eau mitigée est une température mémorisée (103) dans un moyen de mémorisation et remplacée (104) par une température mesurée d'eau froide lorsque la température d'eau réchauffée mesurée par un dit moyen de mesure d'eau réchauffée le plus bas est voisine de la température mesurée d'eau froide.

2. Procédé selon la revendication 1, **caractérisé par le fait que** la température d'eau réchauffée de l'étape c) est une moyenne (102) de plusieurs températures d'eau réchauffée mesurées par des moyens de mesure correspondants.

3. Procédé selon la revendication 1 ou la revendication 2, **caractérisé par le fait que** les fonctions de calcul de capacité d'eau mitigée sont des fonctions correspondant à des segments de faisceaux de droites, dont les points (O_{A}, O_{B}) d'intersection sont définis par des températures d'eau froide.

4. Procédé selon l'une quelconque des revendications 1 à 3, **caractérisé par le fait que** les fonctions de calcul de capacité d'eau mitigée sont des fonctions linéaires ou affines de la moyenne des températures d'eau réchauffée correspondant à des segments de faisceaux de droites, définies par la température d'eau froide.

5. Dispositif de détermination d'une capacité d'eau mitigée à une température d'utilisation prédéterminée, comportant un moyen (T) de fixation d'une consigne de température d'eau chaude, au moins un moyen de mesure (2, 2a, 2b) de température d'eau réchauffée, un moyen (MC) de calcul et de mémorisation de données pour l'estimation d'une capacité d'eau mitigée, dans lequel le dispositif comporte un programme ou un moyen de paramétrage d'une fonction de calcul de ladite capacité d'eau mitigée en fonction d'une température d'eau réchauffée, en utilisant une température d'eau froide entrant dans le chauffe-eau, dans lequel le moyen de paramétrage d'une fonction de calcul de ladite capacité d'eau mitigée utilise en outre la température de consigne choisie, pour paramétrer une fonction de calcul de ladite capacité d'eau mitigée en fonction d'une température d'eau réchauffée,
**caractérisé par le fait que** le moyen (MC) de calcul et de mémorisation de données mémorise une température d'eau froide et la remplace par une mesure de température d'eau froide lorsque la température d'eau réchauffée mesurée par un dit moyen (2, 2b) de mesure d'eau réchauffée le plus bas est voisine de la température mesurée d'eau froide.

6. Dispositif selon la revendication 5, **caractérisé par le fait que** les fonctions de calcul de capacité d'eau mitigée sont des fonctions correspondant à des segments de faisceaux de droites, dont les points (O_{A}, O_{B}) d'intersection sont définis par des températures d'eau froide.

7. Dispositif selon la revendication 5 ou la revendication 6, **caractérisé par le fait que** les fonctions de calcul des capacités d'eau mitigée sont des fonctions linéaires ou affines de la moyenne des températures d'eau réchauffée correspondant à des segments de faisceaux de droites, définies par la température d'eau froide.

## Patentansprüche

1. Verfahren zur Bestimmung einer Mischwasserkapazität mit einer vorbestimmten Benutzungstemperatur, wobei das in einem Warmwasserbereiter enthaltene Wasser auf eine ausgewählte Sollwerttemperatur erwärmt wird, das die folgenden Schritte umfasst:
a) Messen (101) mindestens einer Warmwassertemperatur mit Hilfe mindestens eines entsprechenden Messmittels,
b) Schätzen (106) der Mischwasserkapazität in Abhängigkeit von einer in Schritt a) gemessenen Temperatur,
c) Verwenden einer in den Warmwasserbereiter eintretenden Kaltwassertemperatur (103, 104), um eine Berechnungsfunktion der Mischwasserkapazität in Abhängigkeit von einer Warmwassertemperatur zu parametrieren (105) und um, unter Beabsichtigung der Verwendung der ausgewählten Sollwerttemperatur (100), eine Berechnungsfunktion der Mischwasserkapazität in Abhängigkeit von einer Warmwassertemperatur zu parametrieren (105),
**dadurch gekennzeichnet, dass** die in den Warmwasserbereiter eintretende Kaltwassertemperatur, die bei der Schätzung der Mischwasserkapazität verwendet wird, eine in einem Speichermittel gespeicherte (103) und von einer gemessenen Kaltwassertemperatur ersetzte (104) Temperatur ist, wenn die von einem niedrigsten Warmwassermessmittel gemessene Warmwassertemperatur in der Nähe der gemessenen Kaltwassertemperatur ist.

2. Verfahren nach Anspruch 1, **dadurch gekennzeichnet, dass** die Warmwassertemperatur von Schritt c) ein Mittelwert (102) von mehreren, von entsprechenden Messmitteln gemessenen Warmwassertemperaturen ist.

3. Verfahren nach Anspruch 1 oder Anspruch 2, **dadurch gekennzeichnet, dass** die Mischwasserkapazitäts-Berechnungsfunktionen Funktionen sind, die Segmenten von Strahlen von Geraden entsprechen, deren Schnittpunkte (O_{A}, O_{B}) von Kaltwassertemperaturen bestimmt sind.

4. Verfahren nach einem der Ansprüche 1 bis 3, **dadurch gekennzeichnet, dass** die Mischwasserkapazitäts-Berechnungsfunktionen lineare oder affine Funktionen des Mittelwerts der Warmwassertemperaturen sind, die Segmenten von Strahlen von Geraden entsprechen, die von der Kaltwassertemperatur bestimmt sind.

5. Vorrichtung zur Bestimmung einer Mischwasserkapazität mit einer vorbestimmten Benutzungstemperatur, die ein Mittel (T) zur Festlegung eines Warmwassertemperatursollwerts, mindestens ein Warmwassertemperatur-Messmittel (2, 2a, 2b), ein Berechnungs- und Datenspeichermittel (MC) für die Schätzung einer Mischwasserkapazität aufweist, wobei die Vorrichtung ein Parametrierprogramm oder -mittel einer Berechnungsfunktion der Mischwasserkapazität in Abhängigkeit von einer Warmwassertemperatur aufweist, unter Verwendung einer in den Warmwasserbereiter eintretenden Kaltwassertemperatur, wobei das Parametriermittel einer Berechnungsfunktion der Mischwasserkapazität ferner die ausgewählte Sollwerttemperatur verwendet, um ein Berechnungsfunktion der Mischwasserkapazität in Abhängigkeit von einer Warmwassertemperatur zu parametrieren,
**dadurch gekennzeichnet, dass** das Berechnungs- und Datenspeichermittel (MC) eine Kaltwassertemperatur speichert und sie durch eine Kaltwassertemperaturmessung ersetzt, wenn die von einem niedrigsten Warmwassertemperaturmessmittel (2, 2b) gemessene Warmwassertemperatur in der Nähe der gemessenen Kaltwassertemperatur ist.

6. Verfahren nach Anspruch 5, **dadurch gekennzeichnet, dass** die Mischwasserkapazitäts-Berechnungsfunktionen Funktionen sind, die Segmenten von Strahlen von Geraden entsprechen, deren Schnittpunkte (O_{A}, O_{B}) von Kaltwassertemperaturen bestimmt sind.

7. Vorrichtung nach Anspruch 5 oder Anspruch 6, **dadurch gekennzeichnet, dass** Mischwasserkapazitäts-Berechnungsfunktionen lineare oder affine Funktionen des Mittelwerts der Warmwassertemperaturen sind, die Segmenten von Strahlen von Geraden entsprechen, die von der Kaltwassertemperatur bestimmt sind.

## Claims

1. A method for determining a mixed water capacity at a predetermined temperature of use, wherein the water contained in a boiler is heated to a selected set temperature value, including the following steps:
a) measuring (101) at least one temperature of heated-up water with at least one corresponding measuring means;
b) estimating (106) the mixed water capacity depending on a so-called temperature measured in step a);
c) using a temperature (103, 104) of cold water entering the boiler, for parameterizing (105) a function for calculating said mixed water capacity depending on a heated-up water temperature, and by providing the use of the selected set temperature value (100), in order to parameterize (105) a function for calculating said mixed water capacity depending on a heated-up water temperature;
**characterized by** the fact that the temperature of cold water entering the boiler used in the estimation of the mixed water capacity is a temperature (103) stored in memory in a memory storage means and replaced (104) with a measured cold water temperature when the heated-up water temperature measured by a so-called lowest heated-up water measurement means is close to the measured cold water temperature.

2. The method according to claim 1, **characterized by** the fact that the heated-up water temperature of step c) is an average (102) of several heated-up water temperatures measured by corresponding measurement means.

3. The method according to claim 1 or claim 2, **characterized by** the fact that the functions for calculating a mixed water capacity are functions corresponding to segments of bundles of lines, the intersection points (O_{A}, O_{B}) of which are defined by cold water temperatures.

4. The method according to any of claims 1 to 3, **characterized by** the fact that the functions for calculating a mixed water capacity are linear or affine functions of the average of the heated-up temperatures corresponding to segments of bundles of lines, defined by the cold water temperature.

5. A device for determining a mixed water capacity at a predetermined temperature of use, comprising a means (T) for setting a set hot water temperature value, at least one means (2, 2a, 2b) for measuring heated-up water temperature, a means (MC) for calculating and storing data in memory for estimating a mixed water capacity, wherein that the device includes a program or a means for parameterizing a function for calculating said mixed water capacity depending on a heated-up water temperature, by using a temperature of cold water entering the boiler, wherein the means for parameterizing a function for calculating said mixed water capacity further uses the selected set temperature value, for parameterizing a function for calculating said mixed water capacity versus a heated-up water temperature,
**characterized by** the fact that the means (MC) for calculating and storing data in memory stored in memory a cold water temperature and replaces it with a cold water temperature measurement when the heated-up water temperature measured by a so-called lowest heated-up water measurement means is close to the measured cold water temperature.

6. The device according to claim 5, **characterized by** the fact that the functions for calculating a mixed water capacity are functions corresponding to segments of bundles of lines, the intersection points (O_{A}, O_{B}) of which are defined by cold water temperatures.

7. The device according to claim 5 or claim 6, **characterized by** the fact that the functions for calculating mixed water capacities are linear or affine functions of the average of the heated-up the water temperatures corresponding to segments of bundles of lines, defined by the cold water temperature.
